# EUROPÄISCHE PATENTSCHRIFT

(11) **EP 4 097 719 B1**
(45) Veröffentlichungstag und Bekanntmachung des Hinweises auf die Patenterteilung: **19.03.2025**
(21) Anmeldenummer: 20830128.3
(22) Anmeldetag: 14.12.2020
(51) Int. Cl.: G10L 15/22, G06F 3/01, G10L 17/22, H04N 5/222

(54) **VERFAHREN ZUR STEUERUNG EINES TELEPROMPTERS UND TELEPROMPTER ZUR DYNAMISCHEN ANZEIGE EINES VORDEFINIERTEN TEXTES**
METHOD FOR CONTROLLING A TELEPROMPTER AND TELEPROMPTER FOR THE DYNAMIC DISPLAY OF A PREDEFINED TEXT
PROCÉDÉ DE COMMANDE D'UN TÉLÉPROMPTEUR ET TÉLÉPROMPTEUR POUR L'AFFICHAGE DYNAMIQUE D'UN TEXTE PRÉDÉFINI

(30) Priorität: 31.01.2020 DE 102020102468
(43) Veröffentlichungstag der Anmeldung: 07.12.2022
(73) Patentinhaber: Robidia GmbH, 51105 Köln (DE)
(72) Erfinder: JAKUBI, Masih, 51105 Köln (DE)
(74) Vertreter: dompatent von Kreisler Selting Werner - Partnerschaft von Patent- und Rechtsanwälten mbB
(86) Internationale Anmeldenummer: PCT/EP2020/085973
(87) Internationale Veröffentlichungsnummer: WO 2021/151574

(56) Entgegenhaltungen:
- WO-A1-2019/048063
- US-A1- 2010 162 125
- US-A1- 2018 070 026
- ANONYMOUS: "Speaker recognition - Wikipedia", 6 November 2020 (2020-11-06), XP055783719, Retrieved from the Internet <URL:https://web.archive.org/web/20201106232547/https://en.wikipedia.org/wiki/Speaker_recognition> [retrieved on 20210309]
- ANONYMOUS: "Apple to Add Teleprompter Tools to iMovie and Final Cut Pro - Patently Apple", 10 February 2012 (2012-02-10), XP055562257, Retrieved from the Internet <URL:https://www.patentlyapple.com/patently-apple/2012/02/apple-to-add-teleprompter-tools-to-imovie-and-final-cut-pro.html> [retrieved on 20190226]
- ANONYMOUS: "Speaker recognition - Wikipedia", 24 September 2019 (2019-09-24), XP055783841, Retrieved from the Internet <URL:https://web.archive.org/web/20190924193845/https://en.wikipedia.org/wiki/Speaker_recognition> [retrieved on 20210310]

## Beschreibung

Die vorliegende Erfindung betrifft ein Verfahren zur Steuerung eines Teleprompters für die dynamische Anzeige eines vordefinierten Textes auf einem Bildschirm sowie einen entsprechenden Teleprompter zur dynamischen Anzeige eines Textes.

Teleprompter werden für die dynamische Anzeige von Texten eingesetzt und sind im Allgemeinen bekannt. Die genannten Teleprompter werden häufig von Nachrichtensprechern, Moderatoren oder auch von Politikern verwendet, um einen vordefinierten Text dynamisch auf einem Bildschirm darzustellen, so dass dieser Text von dem Sprecher abgelesen werden oder zur Unterstützung für einen Vortrag dienen kann. Der auf dem Bildschirm angezeigte Text kann dabei von dem Sprecher entweder direkt abgelesen werden oder alternativ über einen Spiegel in Richtung des Sprechers projiziert werden. In einigen Anwendungen kommen semitransparente Spiegel zum Einsatz, die derart angeordnet sind, dass der Sprecher während seiner Rede bzw. seines Vortrags in Richtung eines Publikums oder einer Kamera schauen kann, während er den Text vorliest.

Üblicherweise werden die genannten Teleprompter durch einen Bediener gesteuert. Dieser folgt der Rede des Sprechers und vergleicht sie mit dem vordefinierten Text. In Abhängigkeit von der Redegeschwindigkeit des Sprechers passt der Bediener beispielsweise die Anzeigegeschwindigkeit des Textes auf dem Bildschirm an. Dieser Vorgang ist relativ umständlich und erfordert zusätzliches Personal, das idealerweise vorgeschult sein sollte und insbesondere auch die Sprache des Redners beherrschen muss.

Alternativ zum Einsatz eines Bedieners kann es vorgesehen sein, dass der Redner selbst über eine Steuereinrichtung verfügt, mit der er den angezeigten Text steuern kann. In diesem Zusammenhang ist in der WO 2016/009194 A1 eine Steuereinrichtung in Form eines Fußpedals vorgeschlagen. Durch die Verwendung des beschriebenen Fußpedals ist es nicht mehr erforderlich, eine zusätzliche Person als Bediener des Teleprompters einzusetzen. Dadurch können die Kosten, die etwa bei der Aufnahme einer Nachrichtensendung entstehen, reduziert werden. Nachteilig an dieser Lösung ist jedoch, dass zusätzliche Hardware benötigt wird. Zudem ist es von Nachteil, dass der Sprecher sich einerseits auf seinen Vortrag konzentrieren und andererseits aktiv die Steuerung der Textanzeige kontrollieren muss.

Ferner ist in der GB 2389220 A ein Teleprompter beschrieben, der es erlaubt, einem Benutzer künftig vorzutragende Teile eines Vortrags anzuzeigen. Bei dem beschriebenen Teleprompter wird auf einen Spracherkennungsalgorithmus zurückgegriffen, der die aufgenommenen Sprachsignale auswertet.

In Anonymous: "Apple to Add Teleprompter Tools to iMovie and Final Cut Pro - Patently Apple", 10. Februar 2012 (2012-02-10), XP055562257, Gefunden im Internet: URL:https//www.patentlyapple.com/patently-apple/2012/02/apple-to-add-teleprompter-tools-to-imovie-and-final-cut-pro.html [gefunden am 2019-02-26] ist ein Teleprompter-Werkzeug beschrieben, bei dem ein Benutzer manuell seine Sprechgeschwindigkeit über eine graphische Benutzeroberfläche einstellen kann.

In US 2018/070026 A1 ist ein weiterer Teleprompter beschrieben, bei dem ein Skript identifiziert wird, der Text aufweist, wobei dieses Skript zur Verwendung während des Renderings eines Videos (z. B. während der Benutzer das Video aufzeichnet und/oder streamt) auf einer Benutzeroberfläche angezeigt wird.

Auch gibt es prinzipiell die Möglichkeit, den gesprochenen Text des Sprechers zu detektieren und mit dem vorgegebenen Text zu vergleichen. Auf diese Weise wäre es möglich, die Anzeige des vordefinierten Textes in Abhängigkeit von den gesprochenen Wörtern zu steuern. Dies hat den Vorteil, dass keine zusätzliche Hardware notwendig ist. Allerdings ist auch diese Lösung nicht frei von Nachteilen. So besteht insbesondere das Problem, dass eine solche Lösung anfällig dafür ist, dass dem Sprecher während seiner Rede ein Fehler unterläuft.

Ausgehend von der vorstehend beschriebenen Problematik ist es Aufgabe der vorliegenden Erfindung, ein Verfahren zur Steuerung eines Teleprompters sowie einen entsprechenden Teleprompter bereitzustellen, die eine möglichst komfortable Steuerung des angezeigten Textes erlauben, wobei möglichst keine zusätzliche Hardware benötigt wird und ein einfaches und robustes System bereitgestellt wird.

Zur Lösung der vorstehend genannten Aufgabe wird im Rahmen der vorliegenden Erfindung ein Verfahren zur Steuerung eines Teleprompters für die dynamische Anzeige eines vordefinierten Textes auf einem Bildschirm des Teleprompters vorgeschlagen, wobei das Verfahren die nachfolgenden Schritte umfasst:
- Aufnahme mindestens einer identitätsspezifischen Eingabe eines Sprechers unter Verwendung einer Aufnahmeeinrichtung und Erzeugung eines entsprechenden elektrischen Signals,
- Erkennung des Sprechers durch Auswertung des erzeugten elektrischen Signals,
- Bestimmung mindestens eines Anzeigeparameters in Abhängigkeit von dem erkannten Sprecher,
- dynamische Anzeige des Textes auf dem Bildschirm des Teleprompters unter Verwendung des mindestens einen Anzeigeparameters.

Durch die Erkennung des aktuellen Sprechers und die anschließende Bestimmung eines Anzeigeparameters in Abhängigkeit von dem erkannten Sprecher ermöglicht die vorliegende Erfindung in vorteilhafter Weise eine automatische Anpassung der Anzeigeparameter, insbesondere der Anzeigegeschwindigkeit des Textes, an den aktuellen Sprecher. Auf diese Weise können die für einen spezifischen Sprecher optimalen Anzeigeparameter eingestellt werden, und zwar ohne dass ein zusätzlicher Bediener oder zusätzliche Hardware benötigt wird. Dadurch können beispielsweise die Produktionskosten für eine Nachrichtensendung signifikant reduziert werden. Darüber hinaus bietet die vorliegende Erfindung den Vorteil, dass insbesondere bei internationalen Veranstaltungen mit mehrsprachigen Rednern kein Bediener des Teleprompters benötigt wird, der sämtliche der auf dieser Veranstaltung verwendeten Sprachen beherrscht.

Bei dem erfindungsgemäßen Teleprompter kann vorgesehen sein, dass sich der vorgegebene Text in vertikaler oder horizontaler Richtung auf dem Bildschirm bewegt. Alternativ hierzu kann es auch vorgesehen sein, dass sich der vorgegebene Text dynamisch auf dem Bildschirm aufbaut und beispielsweise wort- oder zeilenweise eingeblendet wird. Während bei einem üblichen Teleprompter lediglich eine Ausgabe des Textes erfolgt, ist bei dem erfindungsgemäßen Teleprompter vorgesehen, dass der Teleprompter auf die Stimme des Sprechers reagiert und in Abhängigkeit des erkannten Sprechers eine automatische Anpassung mindestens eines Anzeigeparameters vornimmt. Die Erkennung des Sprechers durch Auswertung eines generierten elektrischen Signals (insbesondere ein Audiosignal oder ein Bildsignal) wird nachfolgend noch im Detail erläutert.

Gemäß einer Ausführungsform des erfindungsgemäßen Teleprompters kann vorgesehen sein, dass mindestens ein in Abhängigkeit von dem erkannten Sprecher bestimmter Anzeigeparameter die Anzeigegeschwindigkeit des dynamisch angezeigten Textes auf dem Bildschirm betrifft. Insbesondere kann ein Anzeigeparameter die Scroll-Geschwindigkeit des Textes sein. Beispielsweise kann ein entsprechender Anzeigeparameter definieren, dass der vorgegebene Text beispielsweise mit einer Scroll-Geschwindigkeit von zehn Zeilen pro Minute oder mit 60 Wörtern pro Minute auf dem Bildschirm angezeigt wird. Alternativ hierzu kann durch den Anzeigeparameter definiert sein, dass beispielsweise zehn Zeilen des vorgegebenen Textes pro Minute oder drei Wörter des vorgegebenen Textes pro Sekunde eingeblendet werden.

Gemäß einer weiteren Ausführungsform des erfindungsgemäßen Verfahrens kann vorgesehen sein, dass mindestens ein in Abhängigkeit von dem bekannten Sprecher bestimmter Anzeigeparameter mindestens eine Schriftfarbe, eine Hintergrundfarbe oder eine Schriftgröße des angezeigten Textes oder einen Bildschirmkonfigurationsparameter betrifft. Auf diese Weise kann berücksichtigt werden, welche Anzeigeparameter für einen spezifischen Benutzer als optimal empfunden werden. So kann gemäß dem erfindungsgemäßen Verfahren vorgesehen sein, dass bei Erkennung eines ersten Benutzers der vorgegebene Text in schwarzer Farbe auf weißem Hintergrund angezeigt wird, während bei Erkennung eines zweiten Benutzers die Anzeigeparameter derart angepasst werden, dass der vorgegebene Text in hellgrauer Schrift auf schwarzem Hintergrund angezeigt wird. Ebenso kann es für einen Benutzer als besonders angenehm erachtet werden, dass der angezeigte Text in einer besonders großen Schrift angezeigt wird. Auch können die Bildschirmkonfigurationsparameter, wie z. B. die Helligkeit des Displays oder der Displaykontrast für einen spezifischen Benutzer abgespeichert sein, so dass die bevorzugten Bildschirmkonfigurationsparameter für einen spezifischen Sprecher geladen werden, sobald dieser Sprecher durch das erfindungsgemäße Verfahren erkannt wird.

Gemäß einer bevorzugten Ausführungsform der Erfindung kann vorgesehen sein, dass
- die Aufnahme der identitätsspezifischen Eingabe des Sprechers die Aufnahme einer Spracheingabe des Sprechers beinhaltet;
- die Aufnahmeeinrichtung ein Mikrofon aufweist; und
- das elektrische Signal ein Audiosignal umfasst.

Alternativ oder zusätzlich kann bei dem erfindungsgemäßen Verfahren beispielsweise auch vorgesehen sein, dass
- die Aufnahme der identitätsspezifischen Eingabe des Sprechers die Aufzeichnung einer Bildaufnahme des Sprechers beinhaltet;
- die Aufnahmeeinrichtung eine Kamera aufweist; und
- das elektrische Signal ein Bildsignal umfasst.

Gemäß eines weiteren Ausführungsbeispiels des erfindungsgemäßen Verfahrens kann vorgesehen sein, dass die Erkennung des Benutzers auf einer Detektion der Sprechergrundfrequenz basiert. Die Sprechergrundfrequenz kann durch Auswertung des Audiosignals ermittelt werden. Die Ermittlung kann dabei insbesondere im Zeitbereich, im Spektralbereich oder im Cepstralbereich erfolgen. Im Zeitbereich kann dabei das Audiosignal derart ausgewertet werden, dass periodische Bereiche des aufgenommenen Audiosignals (insbesondere bei stimmhaften Tönen aufgenommen) ausgewertet werden und dabei die Periodendauer T₀ des Audiosignals ermittelt wird, wobei anschließend die Sprechergrundfrequenz nach f₀=1/T₀ berechnet wird. Gemäß einer Ausführungsform des erfindungsgemäßen Verfahrens kann dabei vorgesehen sein, dass die Sprechergrundfrequenz über einen vordefinierten Zeitraum wiederholt bestimmt wird und anschließend die durchschnittliche Sprechergrundfrequenz ermittelt wird. Dies hat den Vorteil, dass eine variierende Sprechergrundfrequenz, die beispielsweise durch eine besonders ausgeprägte Intonation des Sprechers hervorgerufen werden kann, die ermittelte und für den Sprecher spezifische Sprechergrundfrequenz weniger stark beeinflusst.

Gemäß einem weiteren Ausführungsbeispiel des erfindungsgemäßen Verfahrens kann vorgesehen sein, dass die Erkennung des Benutzers auf einer Spektralanalyse des Audiosignals beruht. Insbesondere kann dabei vorgesehen sein, dass die Sprechergrundfrequenz im Spektralbereich bestimmt wird. Die Ermittlung der Sprechergrundfrequenz im Spektralbereich kann besonders vorteilhaft sein, da ein etwaiges Rauschen das Audiosignal im Zeitbereich stark beeinflussen kann, so dass die Ermittlung der Sprechergrundfrequenz vor allem bei einem verrauschten Audiosignal im Zeitbereich erschwert sein kann. Insbesondere kann zur Ermittlung der Sprechergrundfrequenz im Spektralbereich eine Kurzzeitspektralanalyse des Audiosignals vorgenommen werden. Dabei werden einzelne Blöcke des zeitabhängigen Audiosignals einer Fourier-Transformation unterzogen, wobei insbesondere eine FFT (Fast Fourier Transformation) zum Einsatz kommen kann. Durch die Fourier-Transformation wird das Audiosignal in den Frequenzbereich überführt, in dem eine vereinfachte Detektion der Sprechergrundfrequenz möglich ist. Wie nachfolgend noch im Zusammenhang mit den Figuren erläutert wird, kann die Sprechergrundfrequenz als Abstand zwischen einzelnen Peaks des Spektrums des Audiosignals ermittelt werden.

Auch kann gemäß dem erfindungsgemäßen Verfahren vorgesehen sein, dass die Erkennung des Sprechers auf Grundlage einer cepstralen Analyse des Audiosignals und einer Detektion der Sprechergrundfrequenz in der cepstralen Domäne erfolgt. Die cepstrale Analyse ist besonders geeignet für die Ermittlung der Sprechergrundfrequenz, da diese eine robuste und präzise Erkennung ermöglicht und weniger anfällig gegenüber Rauschen ist.

Bei der cepstralen Analyse wird im Wesentlichen das Spektrum des Spektrums des Audiosignals ermittelt und ausgewertet. Dabei wird insbesondere in einem vorgegebenen cepstralen Bereich, in dem ein der Sprechergrundfrequenz entsprechender Peak erwartet wird, ausgewertet. Durch die Lage des Peaks kann auf die Sprechergrundfrequenz geschlossen werden.

Gemäß einer Ausführungsform des erfindungsgemäßen Verfahrens kann vorgesehen sein, dass die Erkennung des Sprechers auf einer Ermittlung der Sprechergrundfrequenz im Spektralbereich oder im Cepstralbereich basiert, wobei für die Sprechererkennung lediglich Audiosignale ausgewertet werden, die einem stimmhaften Laut zuzuordnen sind. Dies hat den Vorteil, dass die Erkennung der Sprechergrundfrequenz bei der Auswertung stimmhafter Laute mit einer höheren Präzision erfolgt, als dies bei stimmlosen Lauten möglich ist.

Auch kann gemäß einer besonders bevorzugten Ausführungsform der Erfindung vorgesehen sein, dass eine stimmhaft/stimmlos-Detektion zur Ermittlung der Audiosignale eingesetzt wird, die einem stimmhaften Laut zuzuordnen sind. Ferner kann vorgesehen sein, dass zur stimmhaft/stimmlos-Detektion der erste cepstrale Koeffizient ausgewertet wird. Dabei kann auf einen stimmhaften Laut geschlossen werden, wenn der erste cepstrale Koeffizient größer als null ist. Auf diese Weise kann eine einfache stimmhaft/stimmlos-Detektion im Cepstralbereich implementiert werden, durch welche die Präzision der Sprechererkennung signifikant erhöht werden kann.

Ferner kann gemäß einer Ausführungsform des erfindungsgemäßen Verfahrens vorgesehen sein, dass die Bestimmung eines Anzeigeparameters dadurch erfolgt, dass ein Anzeigeparameter aus einer bereitgestellten Datenbank ausgewählt wird, in der mehreren Sprechern jeweils mindestens ein Anzeigeparameter zugeordnet ist. In der bereitgestellten Datenbank können insbesondere Sprechergrundfrequenzen sowie den Sprechergrundfrequenzen zugeordnete Anzeigeparameter enthalten sein. Dabei kann vorgesehen sein, dass die Datenbank in einem Speicher des Teleprompters gespeichert ist. Alternativ hierzu kann vorgesehen sein, dass die Datenbank in einem separaten System, das über eine Netzwerkverbindung zugänglich ist, hinterlegt ist.

Gemäß einer weiteren Ausführungsform der Erfindung kann vorgesehen sein, dass die Erkennung des Sprechers wiederholt vorgenommen wird, und zwar insbesondere in vordefinierten und bevorzugt festen Zeitabständen. Dies hat insbesondere den Vorteil, dass ein Sprecherwechsel erkannt werden kann, so dass bei dem erfindungsgemäßen Verfahren mehrere Sprecher ein und denselben Teleprompter verwenden können, während beispielsweise die Anzeigegeschwindigkeit des Textes automatisch an den aktuell aktiven Sprecher angepasst wird. Auch kann vorgesehen sein, dass eine quasi-kontinuierliche Detektion der Sprechergrundfrequenz erfolgt, so dass gemäß dem erfindungsgemäßen Verfahren eine zeitnahe Anpassung der Anzeigeparameter ermöglicht wird. Zudem kann beispielsweise vorgesehen sein, dass der Anzeigeparameter immer dann neu bestimmt wird, sobald eine Änderung der detektierten Sprechergrundfrequenz erkannt wird.

Ferner kann gemäß einer Ausführungsform des erfindungsgemäßen Verfahrens vorgesehen sein, dass das Verfahren eine Sprechpausendetektion sowie eine wiederholte Sprechererkennung umfasst, wobei der Abstand zwischen zwei aufeinanderfolgenden Sprechererkennungs-Prozessen dynamisch und in Abhängigkeit von den detektierten Sprechpausen erfolgt. Dadurch wird in vorteilhafter Weise erreicht, dass ein Sprecherwechsel und eine entsprechende Anpassung der Anzeigeparameter zuverlässig erfolgt, sobald der erste Sprecher seinen Vortrag abgeschlossen und der zweite Sprecher seinen Vortrag begonnen hat. Auch wird dadurch in vorteilhafter Weise erreicht, dass die Ressourcen des Teleprompters besonders effizient genutzt werden, da keine permanente Sprechererkennung erfolgen muss, da die Anzahl der Sprechererkennungs-Prozesse reduziert wird, indem lediglich nach den einzelnen Sprechpausen eine Sprechererkennung erfolgt.

Ferner kann gemäß einer weiteren Ausführungsform des erfindungsgemäßen Verfahrens vorgesehen sein, dass die Aufnahme der Spracheingabe des Sprechers unter Verwendung eines Mikrofonarrays erfolgt und dass zur Erhöhung der Genauigkeit der Sprechererkennung ein Beamforming-Verfahren eingesetzt wird. Der Einsatz des Beamforming-Verfahrens hat den Vorteil, dass die Position des aktuellen Sprechers erkannt werden kann und die Richtcharakteristik der Aufnahmeeinrichtung auf den aktuellen Sprecher fokussiert werden kann. Das Mikrofonarray kann in diesem Fall das von dem Sprecher empfangene Sprachsignal verstärken, während es die Störgeräusche (beispielsweise Außenlärm oder etwaigen Unterhaltungen weiterer im Raum befindlicher Personen) unterdrückt. Auf diese Weise kann eine besonders präzise Erkennung des Sprechers gewährleistet werden.

Auch kann vorgesehen sein, dass die Erkennung des Sprechers auf einer Gesichtserkennung basiert. Durch die Verwendung eines Gesichtserkennungsalgorithmus kann eine besonders genaue Erkennung des Sprechers gewährleistet werden. Aus kann es vorgesehen sein, dass zur Sprechererkennung sowohl eine Spracheingabe des Sprechers ausgewertet wird, als auch eine Bildaufnahme des Sprechers. Durch die Auswertung der zusätzlichen Informationen kann die Genauigkeit der Sprechererkennung weiter erhöht werden.

Darüber hinaus kann insbesondere vorgesehen sein, dass die Erkennung des Sprechers auf einer Gesichtserkennung basiert. Die Gesichtserkennung kann entweder alleine oder in Kombination mit der vorstehend beschriebenen Stimmerkennung eingesetzt werden.

Gemäß einer bevorzugten Ausführungsform kann vorgesehen sein, dass das Verfahren zur Erkennung des Sprechers die Extrahierung mehrerer Merkmale aus dem Bildsignal und die anschließende Auswertung der Merkmale umfasst. Beispielsweise kann vorgesehen sein, dass Merkmale ausgewertet werden, die charakteristisch für das Gesicht einer Person sind. Diese Merkmale können vorliegend auch als Gesichtsmerkmale bezeichnet werden.

Im Rahmen der vorliegenden Erfindung können zahlreiche unterschiedliche Implementierungsvarianten für die Extrahierung der Merkmale sowie für die Klassifizierung der Merkmale zum Einsatz kommen.

Insbesondere kann gemäß der vorliegenden Erfindung vorgesehen sein, dass ein Verfahren zur Gesichtserkennung nach Paul Viola und Michael Jones implementiert wird. Ziel dieses Verfahrens ist es, ein bestimmtes Gesicht zu finden und den irrelevanten Hintergrund zu verwerfen. Grundlage hierfür bildet ein Fenster mit einer vordefinierten Größe, welches über das gesamte zu untersuchende Bild geschoben wird. Jeder einzelne Bildausschnitt wird dann auf Merkmale hin untersucht. Dabei können insbesondere Haar-Features (nach den von Alfred Haar entwickelten Haar-Wavelets benannt) verwendet werden. Die Haar-Features berechnen Helligkeitsdifferenzen innerhalb des jeweiligen Bildausschnittes, wobei die Lage und die Skalierung frei wählbar sind. Dabei filtern großflächige Features niederfrequente Merkmale (Helligkeitsunterschiede) heraus, wohingegen schmale Features hochfrequentes (z.B. Ecken und Kanten) herausfiltern. Die Berechnung erfolgt über eine Summation von Pixeln in den jeweiligen Blockregionen. Bei einer Standardgröße des Fensters von 24 x 24 Pixel ergeben sich bei dem Algorithmus nach Viola und Jones insgesamt zwischen 160.000 und 180.000 solcher, unterschiedlich skalierter Merkmale.

Um eine zuverlässige Gesichtserkennung zu gewährleisten, können einzelne Haar-Features zu Klassifikatoren zusammengefasst werden, welche über einen Mehrheitsentscheid gemeinsam entscheiden, ob das betrachtete Objekt das Gesicht einer bestimmten Person darstellt oder nicht. Die Klassifikatoren können mit einem Trainingsdatensatz trainiert werden. Dabei lernt der Klassifikator durch zahlreiche zur Verfügung gestellte Testbilder unterschiedlicher Personen. Je mehr Testbilder zur Verfügung gestellt werden, desto höher ist die zu erwartende Genauigkeit der anschließenden Gesichtserkennung. Der Klassifikator kann auf verschiedenen Methoden und Modellen basieren. Unterschiedliche Verfahren, die auf dem Gebiet des Maschinellen Lernens bekannt sind, können dabei zum Einsatz können. Insbesondere kann es vorgesehen sein, dass ein künstliches neuronales Netz verwendet wird, dass durch die Testbilder trainiert wird und anschließend als Klassifikator für die Gesichtserkennung verwendet wird.

Ferner kann gemäß der vorliegenden Erfindung vorgesehen sein, dass die für die Sprechererkennung verwendete Merkmalserkennung auf dem SURF/SIFT-Algorithmus und einem Histogrammvergleich basiert. SURF (engl. Speeded Up Robust Features) ist ein beschleunigter Algorithmus für die robuste Erkennung von markanten Merkmalen in Bildern. Die Basis bilden dabei Mittelwertfilter und Integralbilder. Vorangegangen ist die "Scale-invariant feature transform" (SIFT), welche hingegen mit Gauß-Filtern arbeitet. Nachdem ein Bild mit Hilfe des entsprechenden Filters geglättet wurde, werden die markanten Punkte ermittelt. Sie sind dann markant, wenn sie stark von ihrem Hintergrund abweichen. Hierzu werden allen Punkten ihre Gradienten (z.B. an Ecken oder Kanten) zugeordnet und lokal als Histogramm gespeichert. Die herausragendsten Gradienten bleiben dann als Merkmale übrig. Der große Vorteil dieser Merkmale ist, dass sie unempfindlich gegenüber Beleuchtungsänderungen und perspektivischen Verzerrungen (Rotation, Translation, Skalierung) sind. Normalerweise werden für diese Verfahren, aufgrund der überwiegenden Verfügbarkeit, Grauwertbilder verwendet. Es lassen sich jedoch in Farbbildern mit ihrem dreidimensionalen Merkmalsraum aufgrund der um zwei erweiterte Dimension mehr und bessere robuste Merkmale finden. Die Verwendung von Farbbildern für den SURF- oder SIFT- Algorithmus ist also empfehlenswert und kann dazu beitragen, eine besonders hohe Erkennungsrate zu gewährleisten. Mit Hilfe des (hier nicht näher beschriebenen) RANSAC10-Algorithmus lassen sich dann in zwei Bildern mit markanten, homologen Punkten Übereinstimmungen suchen und diese somit vergleichen.

Darüber hinaus kann es vorgesehen sein, dass der Körper bzw. die Statur eines Sprechers ausgewertet werden, um diesen eindeutig zu identifizieren. Die in diesem Zusammenhang verwendeten Merkmale können auch als Körpermerkmale bezeichnet werden. Es kann vorgesehen sein, dass die Körpermerkmale alleine oder in Kombination mit weiteren Merkmalen, insbesondere mit den Gesichtsmerkmalen verwendet werden. Durch die Kombination unterschiedlicher Merkmalsarten kann erreicht werden, dass die Genauigkeit bei der Sprechererkennung signifikant erhöht wird.

Des Weiteren kann gemäß der vorliegenden Erfindung vorgesehen sein, dass die extrahierten Merkmale oder Merkmalskombinationen mit Merkmalen oder Merkmalskombinationen verglichen werden, die in einer Datenbank hinterlegt sind, wobei in der Datenbank Merkmale oder Merkmalskombinationen sowie den Merkmalen oder den Merkmalskombinationen zugeordnete Sprecher hinterlegt sind.

Ferner wird zur Lösung der vorstehend genannten Aufgabe ein Teleprompter zur dynamischen Anzeige eines vordefinierten Textes vorgeschlagen, mit
- einem Bildschirm zur Anzeige des Textes,
- einer Aufnahmeeinrichtung zur Aufnahme einer identitätsspezifischen Eingabe,
- einer Auswerteeinheit zur Umwandlung der identitätsspezifischen Eingabe in ein elektrisches Signal, zur Auswertung des elektrischen Signals sowie zur Erkennung des Sprechers, sowie
- einer Steuereinheit zur Erzeugung eines Steuersignals zum Ansteuern des Bildschirms zur dynamischen Anzeige des Textes unter Verwendung des mindestens einen Anzeigeparameters und in Abhängigkeit des erkannten Sprechers.

Gemäß einer Ausführungsform des erfindungsgemäßen Teleprompters kann vorgesehen sein, dass der Teleprompter ein Mikrofon oder ein Mikrofonarray aufweist. Durch das Mikrofon kann die Stimme des Sprechers aufgenommen werden. Das Mikrofonarray bietet den Vorteil, dass eine Lokalisierung des aktiven Sprechers vorgenommen werden kann, so dass durch den Einsatz eines Beamforming-Verfahrens störende Geräusche unterdrückt werden können.

Auch kann gemäß der vorliegenden Erfindung vorgesehen sein, dass der Teleprompter eine Kamera oder ein Kameraarray aufweist.

Ferner kann bei dem erfindungsgemäßen Teleprompter vorgesehen sein, dass die Aufnahmeeinrichtung eine Speichereinheit aufweist, in der eine Datenbank hinterlegt ist, die Daten über mehrere Sprecher sowie den Sprechern zugeordnete Anzeigeparameter enthält. Die Datenbank kann entweder statisch vorgegeben sein oder aber auch dynamisch im Laufe der Zeit erweitert werden. Hierzu kann es beispielsweise vorgesehen sein, dass ein Verfahren zum maschinellen Lernen eingesetzt wird, durch das der erfindungsgemäße Teleprompter im Laufe der Zeit erlernt, welche Anzeigeparameter für einen spezifischen Sprecher zu bevorzugen sind. So kann die erfindungsgemäße Vorrichtung im Laufe der Zeit erlernen, dass bei einem ersten Sprecher eine erste Anzeigegeschwindigkeit ausgewählt werden sollte, während bei einem zweiten Sprecher eine erhöhte Anzeigegeschwindigkeit angemessen ist. Bei dem Lernprozess können insbesondere Daten aus der Vergangenheit ausgewertet werden, bei denen ein Bediener des Teleprompters die Anzeigeparameter für einen spezifischen Sprecher manuell eingestellt hat.

Gemäß einer weiteren Ausführungsform der erfindungsgemäßen Vorrichtung kann vorgesehen sein, dass der Teleprompter ein Netzwerkmodul zur Verbindung mit einer Cloud-Speichereinheit aufweist. Dadurch können sämtliche Daten, die Informationen über Sprechereigenschaften (beispielsweise die Sprechergrundfrequenz) sowie den Sprechern zugeordnete Anzeigeparameter in einer separaten Datenbank ausgelagert werden, so dass der Teleprompter keinen großen Speicher benötigt.

Die vorliegende Erfindung wird nachfolgend anhand der Figuren erläutert. In den Figuren sind verschiedene Ausführungsformen der Erfindung dargestellt, wobei es als selbstverständlich angesehen wird, dass die vorliegende Erfindung nicht auf die in den Figuren abgebildeten Ausführungsbeispiele beschränkt ist. In den nachfolgenden Figuren zeigt die
- Fig. 1: eine Ausführungsform des erfindungsgemäßen Teleprompters,
- Fig. 2: eine Übersicht eines Ausführungsbeispiels des erfindungsgemäßen Verfahrens,
- Fig. 3: eine detaillierte Darstellung der einzelnen Verfahrensschritte der Sprechererkennung,
- Fig. 4: eine weiteres Ausführungsbeispiel für die Sprechererkennung,
- Fig. 5: ein Audiosignal im Zeitbereich,
- Fig. 6: ein Audiosignal im Frequenzbereich,
- Fig. 7: ein Audiosignal im Cepstralbereich und
- Fig. 8: ein Beispiel für die in einer Datenbank hinterlegten Daten für verschiedene Sprecher.

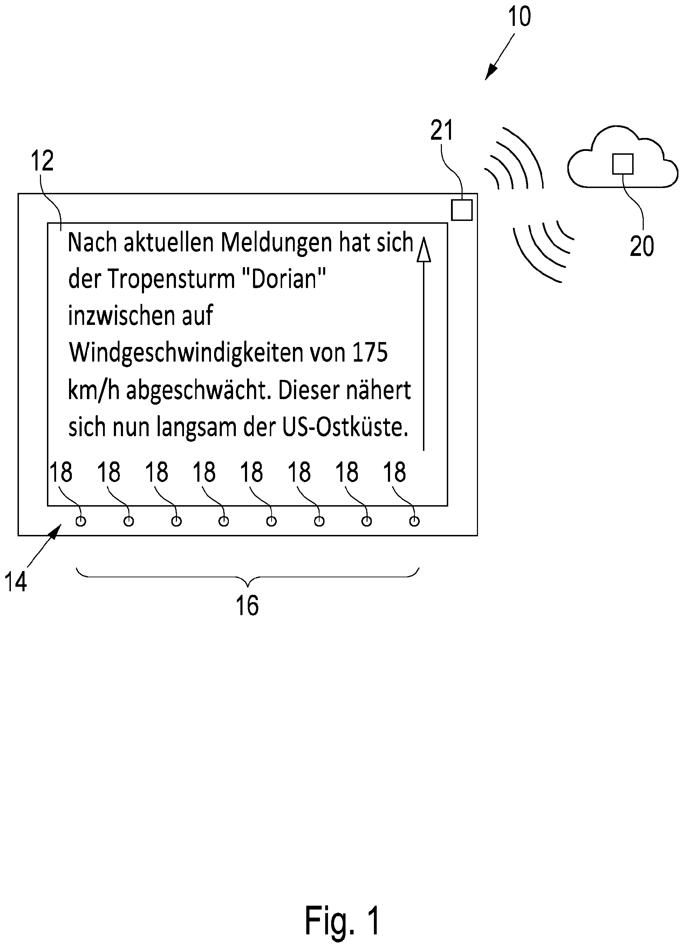

In der Fig. 1 ist ein Ausführungsbeispiel des erfindungsgemäßen Teleprompters 10 dargestellt. Der Teleprompter 10 weist insbesondere einen Bildschirm 12 auf, auf dem ein vorgegebener Text dynamisch angezeigt wird. Insbesondere kann der Text mit einer vorgegebenen Geschwindigkeit entlang des Bildschirms 12 in vertikaler Richtung scrollen. Bei dem angezeigten Text kann es sich beispielsweise um einen Nachrichtentext handeln, den ein Nachrichtensprecher von dem Bildschirm 12 ablesen kann. Ferner weist der Teleprompter 10 eine Aufnahmeeinrichtung 14 für die Aufnahme einer Spracheingabe eines Sprechers auf. In dem in der Fig. 1 dargestellten Ausführungsbeispiel weist die Aufnahmeeinrichtung 14 ein Mikrofonarray 16 auf, das sich insbesondere aus acht Mikrofonen 18 zusammensetzt. Die Aufnahmeeinrichtung 14 ist daher einerseits dazu ausgelegt, die Stimme des Sprechers aufzunehmen und andererseits dazu, ein Beamforming-Verfahren umzusetzen. Dadurch kann der Sprecher lokalisiert werden und die Richtcharakteristik des Mikrofonarrays 16 auf den aktuellen Sprecher ausgerichtet werden. Die durch die Aufnahmeeinrichtung 14 aufgenommene Spracheingabe des Sprechers kann in ein Audiosignal umgewandelt und anschließend ausgewertet werden. Bei der Auswertung kann insbesondere das aufgenommene Audiosignal mit einer in einer Speichereinheit 20 hinterlegten Datenbank verglichen werden, um auf diese Weise den aktuellen Sprecher zu identifizieren. Anschließend können die Anzeigeparameter, die dem spezifischen Sprecher zugeordnet sind, eingestellt werden, um eine möglichst komfortable Wiedergabe des angezeigten Textes zu ermöglichen. In dem hier dargestellten Ausführungsbeispiel ist die Speichereinheit 20 in einer separaten Einrichtung hinterlegt, wobei ein Datenaustausch mit der Speichereinheit 20 über ein Netzwerkmodul 21 ermöglicht wird.

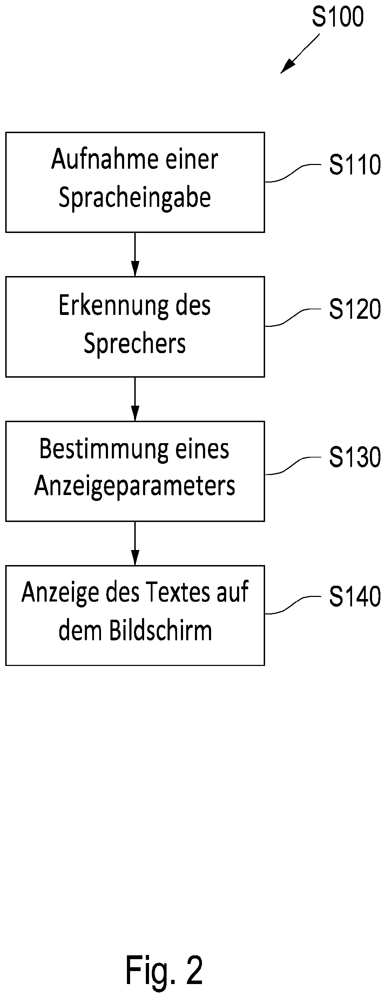

In der Fig. 2 ist ein Ausführungsbeispiel des erfindungsgemäßen Verfahrens S100 dargestellt, das die Verfahrensschritte S110 bis S140 umfasst. Dabei wird in einem ersten Schritt S110 eine akustische Eingabe des Sprechers aufgenommen. Die Spracheingabe wird in ein Audiosignal umgewandelt. Anschließend erfolgt die Erkennung des Sprechers (S120), wobei das aufgenommene Audiosignal ausgewertet wird. Anschließend wird in Abhängigkeit des erkannten Sprechers ein dem Sprecher zugeordneter Anzeigeparameter bestimmt (S130). Schließlich wird der vordefinierte Text unter Verwendung des dem spezifischen Sprecher zugeordneten Anzeigeparameters auf dem Bildschirm angezeigt (S140).

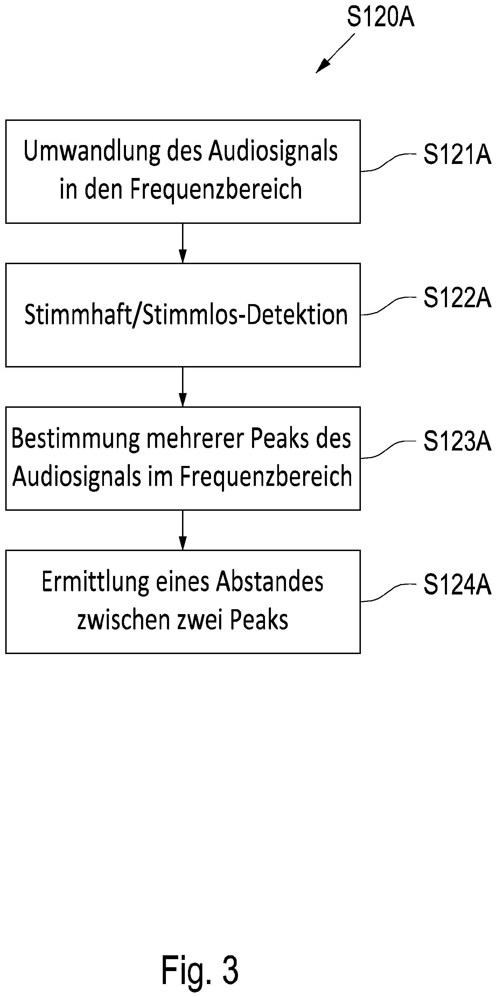

In der Fig. 3 sind die einzelnen Schritte eines ersten Ausführungsbeispiels der Sprechererkennung (S120A) dargestellt. Hierbei wird zunächst das aufgenommene Audiosignal in den Frequenzbereich umgewandelt (S121A).

Anschließend wird in dem in der Fig. 3 dargestellten Ausführungsbeispiel eine stimmhaft/stimmlos-Detektion vorgenommen. Die stimmhaft/stimmlos-Detektion dient dazu, dass vorzugsweise nur die Audioframes für die Sprechererkennung verwendet werden, die stimmhafte Laute darstellen. Dies bietet den Vorteil, dass die Grundfrequenzbestimmung bei stimmhaften Lauten eine höhere Genauigkeit liefert als bei stimmlosen Lauten. Es ist jedoch zu betonen, dass die stimmhaft/stimmlos-Detektion (S122A) im Rahmen der vorliegenden Erfindung als optional anzusehen ist. Sofern ein stimmhafter Laut erkannt wurde, werden aus dem Audiosignal im Frequenzbereich mehrere Peaks bestimmt (S123A). Anschließend wird der Abstand zwischen zwei Peaks des Audiosignals im Frequenzbereich ermittelt (S124A). Dabei können beispielsweise die beiden Peaks mit den niedrigsten Frequenzen betrachtet und miteinander verglichen werden. Alternativ hierzu kann es auch vorgesehen sein, dass der Abstand von mehr als zwei Peaks ermittelt wird und anschließend der Mittelwert aus den einzelnen gemessenen Abständen berechnet wird. Auf diese Weise kann eine mittlere Sprechergrundfrequenz bestimmt werden, in der etwaige Unregelmäßigkeiten oder etwaiges Rauschen im Audiosignal einen geringeren Einfluss auf die ermittelte Sprechergrundfrequenz hat. Dadurch kann die Präzision bei der Detektion der Sprechergrundfrequenz erhöht werden. Die Sprechergrundfrequenz kann dazu dienen, den Sprecher zu identifizieren.

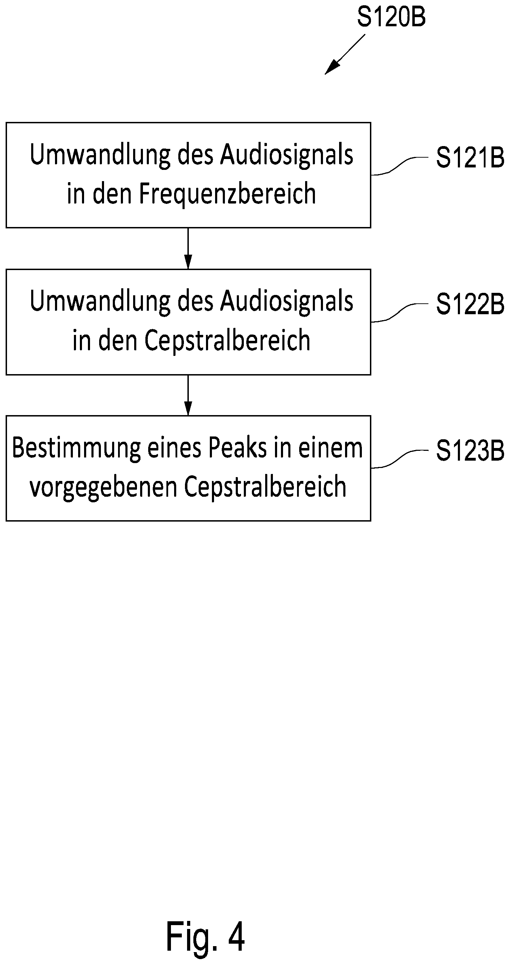

In der Fig. 4 sind die einzelnen Schritte einer weiteren Ausführungsform der Sprechererkennung dargestellt (S120B). Dabei wird zunächst das Audiosignal in den Frequenzbereich umgewandelt. Hierzu wird das Audiosignal bevorzugt einer FFT (Fast Fourier Transformation) unterzogen. Anschließend wird das Audiosignal in den cepstralen Bereich transformiert (S122B). Hierzu wird das Spektrum des Audiosignals im Spektralbereich ermittelt. Auch hierbei erfolgt bevorzugt eine FFT des bereits transformierten Audiosignals. Schließlich wird ein Peak in einem vorgegebenen Bereich ermittelt (S123B). Aus der Lage des Peaks des Audiosignals im Cepstralbereich kann dann auf die Sprechergrundfrequenz geschlossen werden. Alternativ hierzu kann die Lage des Peaks unmittelbar dazu verwendet werden, auf den Sprecher zu schließen. Hierzu kann beispielsweise die Lage des Peaks mit einer Datenbank verglichen werden, in der weitere Peakpositionen und diesen Werten zugeordnete Sprecher hinterlegt sind.

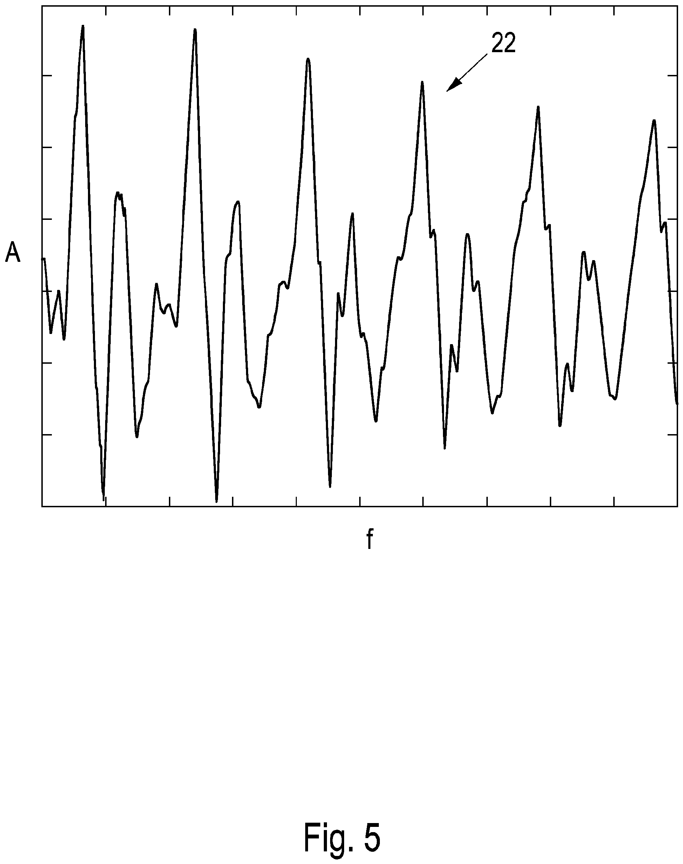

In der Fig. 5 ist beispielhaft ein Audiosignal im Zeitbereich 22 dargestellt. Wie in dieser Figur zu erkennen ist, weist das Audiosignal, insbesondere bei stimmhaften Lauten, eine periodische Form auf. Sofern die Erkennung des Sprechers über die Auswertung dessen Grundfrequenz erfolgen soll, kann aus dem in der Fig. 5 dargestellten Audiosignal die Periodendauer ermittelt werden. Anschließend kann, wie vorstehend erläutert, die Grundfrequenz aus der Periodendauer berechnet werden. Während dieses Verfahren bei Sprachsignalen mit einem hohen SNR (Signal-Rausch-Verhältnis oder im Englischen: signal-to-noise ratio) gute Ergebnisse liefert, ist bei niedrigeren SNRs eine reduzierte Genauigkeit bei der Erkennung der Sprechergrundfrequenz zu erwarten. In diesen Fällen ist eine Ermittlung der Sprechergrundfrequenz im spektralen Bereich zu bevorzugen.

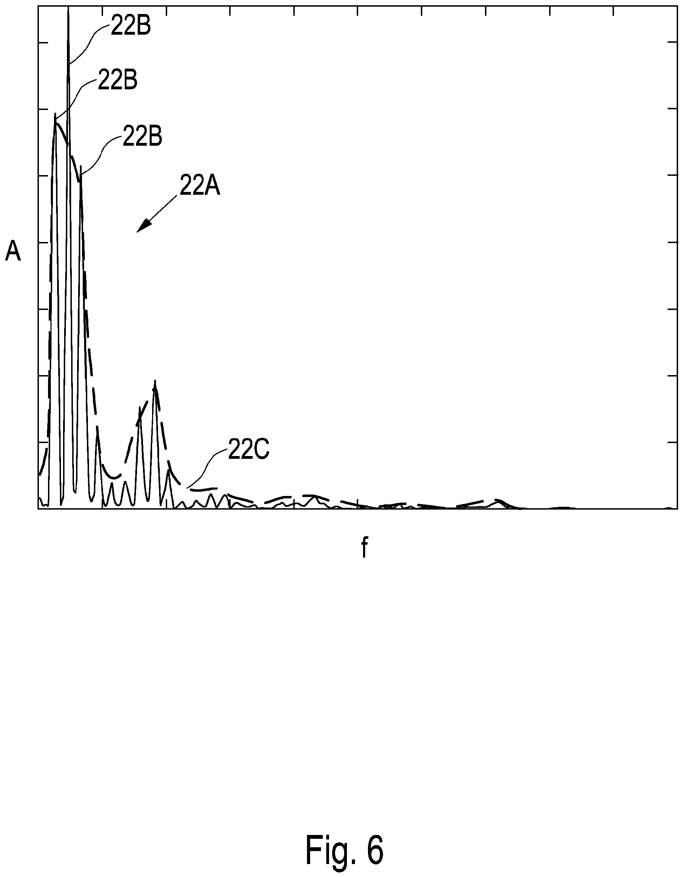

In der Fig. 6 ist daher ein Audiosignal im Frequenzbereich 22A dargestellt. Das Audiosignal 22A kann beispielsweise dadurch ermittelt werden, dass das Audiosignal im Zeitbereich 22 einer Kurzzeit-Fourier-Transformation (im Englischen auch als Short-Time Fourier Transform oder STFT bezeichnet) unterzogen wird. Dabei wird beispielsweise ein kurzes Zeitfenster des Audiosignals im Zeitbereich 22 extrahiert und einer FFT unterzogen. Das Zeitfenster kann beispielsweise 20 bis 40 ms des Audiosignals im Zeitbereich 22 umfassen. Nach Durchführung der STFT wird das in der Fig. 6 dargestellte Audiosignal im Frequenzbereich 22A gewonnen. Wie in der Fig. 6 zu erkennen ist, weist das Audiosignal im Frequenzbereich 22A mehrere Peaks 22B auf. Zudem ist in der Fig. 6 eine Einhüllende 22C des Audiosignals dargestellt. In der Fig. 6 ist zu erkennen, dass die einzelnen Peaks 22B den gleichen Abstand zueinander haben. Dies ist insbesondere charakteristisch für stimmhafte Laute. Durch Ermittlung des Abstandes zwischen zwei Peaks kann die Grundfrequenz des Sprechers ermittelt werden. Hierzu können beispielsweise die beiden Peaks 22B mit den niedrigsten Frequenzen ausgewählt werden und die Differenz der Lage der beiden Peaks ermittelt werden. Alternative hierzu können beispiels-weise die fünf Peaks 22B oder die zehn Peaks 22B mit den niedrigsten Frequenzen ausgewählt, der Abstand zwischen diesen Peaks berechnet und anschließend der Mittelwert dieser Abstände ermittelt werden. Eine weitere Alternative für die Bestimmung der Sprechergrundfrequenz ist, das erste Peak 22B und beispielsweise das erste und das (1+n)-te Peak 22B zu betrachten und die Differenz der Lage dieser Peaks durch n zu dividieren. Durch die Berücksichtigung mehrerer Peaks bzw. von Peaks, die weiter voneinander beabstandet sind, kann die Genauigkeit der Grundfrequenzbestimmung erhöht werden.

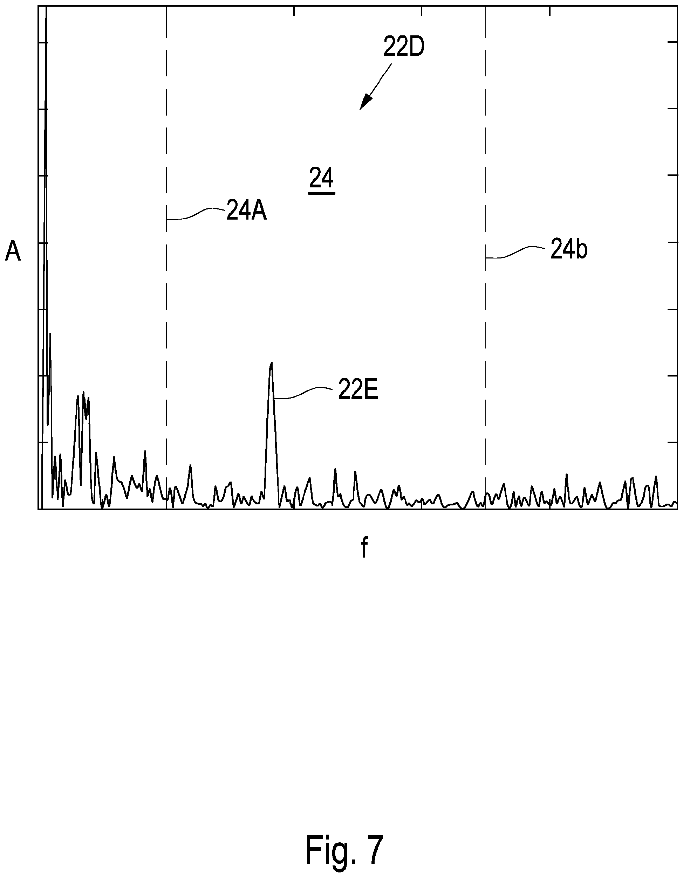

In der Fig. 7 ist das Audiosignal im Cepstralbereich 22D dargestellt. Das Cepstrum des Audiosignals kann durch eine FFT des Audiosignals im Frequenzbereich 22A ermittelt werden. Bei einem Cepstrum ist es charakteristisch, dass in einem mittleren Bereich 24 ein Peak 22E zu erkennen ist, dessen Lage charakteristisch für die Sprechergrundfrequenz ist. Für die Ermittlung der Sprechergrundfrequenz im Cepstralbereich ist es daher notwendig, einen vorgegebenen Cepstralbereich 24 zu definieren, in dem das für die Grundfrequenz charakteristische Peak 22E zu erwarten ist. Der vorgegebene Cepstralbereich 24 weist eine untere Grenze 24A und eine obere Grenze 24B auf. Diese ergeben sich dadurch, dass die Sprechergrundfrequenz in einem bestimmten Bereich zu erwarten ist. Beispielsweise ist die Sprechergrundfrequenz bei einem männlichen Sprecher in einem Bereich von etwa 90 bis 160 Hertz zu erwarten, während die Sprechergrundfrequenz bei weiblichen Sprechern in einem Bereich von ca. 180 bis 260 Hertz zu erwarten ist. Im Gegensatz hierzu kann sich die Sprechergrundfrequenz bei Kindern in einem Bereich über 300 Hertz befinden. Nach der Erkennung der Lage des Peaks 22E kann hieraus zunächst die Sprechergrundfrequenz ermittelt und der ermittelte Wert mit einer Datenbank verglichen werden. Alternativ hierzu kann auch die Lage des Peaks 22E unmittelbar verwendet werden, um auf einen spezifischen Sprecher zu schließen. Hierzu kann statt der Sprechergrundfrequenz die Lage des Peaks 22E in einer Datenbank hinterlegt sein, wobei jeweils eine Peaklage einem Sprecher zugeordnet sein kann.

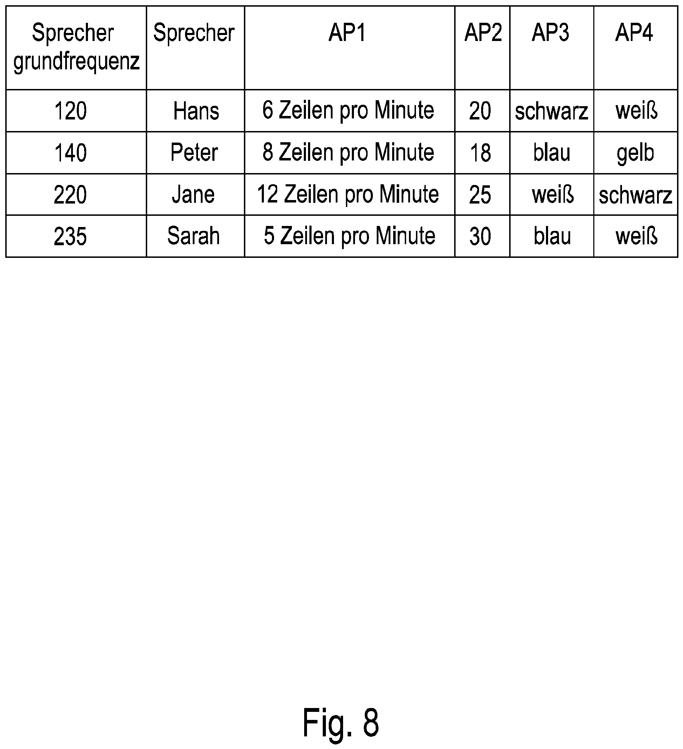

In der Fig. 8 ist beispielhaft eine Datenbank 26 dargestellt, in der vier verschiedene Sprechergrundfrequenzen (120 Hertz, 140 Hertz, 220 Hertz und 235 Hertz) hinterlegt sind, die vier verschiedenen Sprechern (Hans, Peter, Jana und Sarah) zugeordnet sind. Wenn beispielsweise nach dem erfindungsgemäßen Verfahren eine Sprechergrundfrequenz von 120 Hertz detektiert wird, so können die Anzeigeparameter (AP1, AP2, AP3 und AP4) automatisch ausgewählt werden, die für den Sprecher Hans hinterlegt sind. Nach dem in der Fig. 8 gezeigten Beispiel kann also der auf dem Bildschirm des Teleprompters dargestellte Text mit einer Anzeigegeschwindigkeit von sechs Zeilen pro Minute (AP1) dargestellt werden, während der angezeigte Text mit einer Schriftgröße 20 (AP2) auf dem Bildschirm wiedergegeben wird. Zudem kann in dem dargestellten Beispiel vorgesehen sein, dass der angezeigte Text in schwarzer Farbe und auf einem weißen Hintergrund (AP3 und AP4) dargestellt wird. Wird hingegen eine Sprechergrundfrequenz von 220 Hertz detektiert, so wird automatisch eine für die Sprecherin Jana hinterlegte Anzeigegeschwindigkeit von 12 Zeilen pro Minute (AP1) ausgewählt, wobei der angezeigte Text in einer Schriftgröße 25 (AP2) auf dem Bildschirm dargestellt wird. In der Datenbank 26 ist zudem vermerkt, dass der Text, welcher der Sprecherin Jana angezeigt werden soll, in weißer Farbe und auf schwarzem Hintergrund angezeigt werden sollte (AP3 und AP4). Wenn ein Wechsel des Sprechers erfolgt, so kann das System innerhalb kürzester Zeit die Anzeigeparameter an den aktuellen Sprecher anpassen.

Die vorliegende Erfindung wurde zur Veranschaulichung vorwiegend im Zusammenhang mit einer Sprechererkennung erläutert, die auf einer Erkennung der Sprechergrundfrequenz basiert. Es ist jedoch für den Fachmann ersichtlich, dass die Erfindung nicht hierauf beschränkt ist. Vielmehr können auch andere charakteristische Eigenschaften verwendet werden, die zur Unterscheidung verschiedener Sprecher geeignet sind. Insbesondere ist es im Rahmen der vorliegenden Erfindung auch möglich, Merkmale aus dem aufgenommenen Audiosignal zu extrahieren, welche die für einen spezifischen Sprecher charakteristische Intonation darstellen. Ferner ist es möglich, aus dem aufgenommenem Audiosignal Merkmale zu extrahieren, die die Aussprache bzw. einen Dialekt des Sprechers beschreiben.

### BEZUGSZEICHENLISTE

- 10: Teleprompter
- 12: Bildschirm
- 14: Aufnahmeeinrichtung
- 16: Mirofonarray
- 18: Mikrofon
- 20: Speichereinheit
- 21: Netzwerkmodul
- 22: Audiosignal im Zeitbereich
- 22A: Audiosignal im Frequenzbereich
- 22B: Peak des Audiosignals im Frequenzbereich
- 22C: Einhüllende des Audiosignals im Frequenzbereich
- 22D: Audiosignal im Cepstralbereich
- 22E: Peak des Audiosignals im Cepstralbereich
- 24: vorgegebener Cepstralbereich
- 24A: untere Grenze des vorgegebenen Cepstralbereichs
- 24B: obere Grenze des vorgegebenen Cepstralbereichs
- 26: Datenbank
- S100: erfindungsgemäßes Verfahren
- S110: erster Schritt des erfindungsgemäßen Verfahrens
- S120: zweiter Schritt des erfindungsgemäßen Verfahrens
- S130: dritter Schritt des erfindungsgemäßen Verfahrens
- S140: vierter Schritt des erfindungsgemäßen Verfahrens
- S120A: erste Ausführungsform der Sprechererkennung
- S120B: zweite Ausführungsform der Sprechererkennung
- S121A: erster Schritt der ersten Ausführungsform der Sprechererkennung
- S122A: zweiter Schritt der ersten Ausführungsform der Sprechererkennung
- S123A: dritter Schritt der ersten Ausführungsform der Sprechererkennung
- S124A: vierter Schritt der ersten Ausführungsform der Sprechererkennung
- S121B: erster Schritt der zweiten Ausführungsform der Sprechererkennung
- S122B: zweiter Schritt der zweiten Ausführungsform der Sprechererkennung
- S123B: dritter Schritt der zweiten Ausführungsform der Sprechererkennung

## Patentansprüche

1. Verfahren (S100) zur Steuerung eines Teleprompters (10) für die dynamische Anzeige eines vordefinierten Textes auf einem Bildschirm (12) des Teleprompters (10), wobei das Verfahren (S100) die nachfolgenden Schritte umfasst:
- Aufnahme (S110) mindestens einer identitätsspezifischen Eingabe eines Sprechers unter Verwendung einer Aufnahmeeinrichtung und Erzeugung eines entsprechenden elektrischen Signals,
- Erkennung (S120) des Sprechers durch Auswertung des erzeugten elektrischen Signals,
- Bestimmung (S130) mindestens eines Anzeigeparameters in Abhängigkeit von dem erkannten Sprecher,
- dynamische Anzeige (S140) des Textes auf dem Bildschirm (12) des Teleprompters (10) unter Verwendung des mindestens einen Anzeigeparameters.

2. Verfahren (S100) nach Anspruch 1, **dadurch gekennzeichnet, dass**
- die Aufnahme (S110) der identitätsspezifischen Eingabe des Sprechers die Aufnahme einer Spracheingabe des Sprechers beinhaltet;
- die Aufnahmeeinrichtung ein Mikrofon (18) aufweist; und
- das elektrische Signal ein Audiosignal (22) umfasst.

3. Verfahren (S100) nach einem der Ansprüche 1 oder 2, **dadurch gekennzeichnet, dass**
- die Aufnahme (S110) der identitätsspezifischen Eingabe des Sprechers die Aufzeichnung einer Bildaufnahme des Sprechers beinhaltet;
- die Aufnahmeeinrichtung eine Kamera aufweist; und
- das elektrische Signal ein Bildsignal umfasst.

4. Verfahren (S100) nach einem der vorhergehenden Ansprüche, **dadurch gekennzeichnet, dass** mindestens ein in Abhängigkeit von dem erkannten Sprecher bestimmter Anzeigeparameter die Anzeigegeschwindigkeit des dynamisch angezeigten Textes auf dem Bildschirm (12) ist.

5. Verfahren (S100) nach einem der vorhergehenden Ansprüche, **dadurch gekennzeichnet, dass** mindestens ein in Abhängigkeit von dem bekannten Sprecher bestimmter Anzeigeparameter mindestens eine Schriftfarbe, eine Hintergrundfarbe oder eine Schriftgröße des angezeigten Textes oder einen Bildschirmkonfigurationsparameter betrifft.

6. Verfahren (S100) nach einem der Ansprüche 2 bis 5, **dadurch gekennzeichnet, dass** die Erkennung des Sprechers auf einer Detektion der Sprechergrundfrequenz basiert.

7. Verfahren (S100) nach einem der Ansprüche 2 bis 6, **dadurch gekennzeichnet, dass** die Erkennung des Sprechers auf einer Spektralanalyse des Audiosignals (22) beruht.

8. Verfahren (S100) nach einem der Ansprüche 2 bis 7, **dadurch gekennzeichnet, dass** die Erkennung des Sprechers auf Grundlage einer cepstralen Analyse des Audiosignals (22) und einer Detektion der Sprechergrundfrequenz in der cepstralen Domäne erfolgt.

9. Verfahren (S100) nach einem der Ansprüche 2 bis 8, **dadurch gekennzeichnet, dass** die Erkennung des Sprechers auf einer Ermittlung der Sprechergrundfrequenz im Spektralbereich oder im Cepstralbereich basiert, wobei für die Sprechererkennung lediglich Audiosignale (22) ausgewertet werden, die einem stimmhaften Laut zuzuordnen sind, wobei bevorzugt eine stimmhaft/stimmlos-Analyse zur Ermittlung der Audiosignale (22) eingesetzt wird, die einem stimmhaften Laut zuzuordnen sind, wobei für die stimmhaft/stimmlos-Analyse des Audiosignals (22) der erste cepstrale Koeffizient des Audiosignals (22) ausgewertet wird und wobei auf einen stimmhaften Laut geschlossen wird, wenn der erste cepstrale Koeffizient größer ist als Null.

10. Verfahren (S100) nach einem der Ansprüche 2 bis 9, **dadurch gekennzeichnet, dass** das Verfahren (S100) eine Sprechpausendetektion sowie eine wiederholte Sprechererkennung umfasst, wobei der Abstand zwischen zwei aufeinanderfolgenden Sprechererkennungs-Prozessen dynamisch und in Abhängigkeit von den detektierten Sprechpausen erfolgt.

11. Verfahren (S100) nach einem der vorhergehenden Ansprüche, **dadurch gekennzeichnet, dass** die Aufnahme der Spracheingabe des Sprechers unter Verwendung eines Mikrofonarrays (16) erfolgt und dass zur Erhöhung der Genauigkeit der Sprechererkennung ein Beamforming-Verfahren eingesetzt wird.

12. Verfahren (S100) nach einem der Ansprüche 3 bis 11, **dadurch gekennzeichnet, dass** die Erkennung des Sprechers auf einer Gesichtserkennung basiert.

13. Verfahren (S100) nach einem der Ansprüche 3 bis 12, **dadurch gekennzeichnet, dass** Verfahren zur Erkennung des Sprechers die Extrahierung mehrerer Merkmale aus dem Bildsignal und die anschließende Auswertung der Merkmale umfasst.

14. Verfahren (S100) nach Anspruch 13, **dadurch gekennzeichnet, dass** die extrahierten Merkmale oder Merkmalskombinationen mit Merkmalen oder Merkmalskombinationen verglichen werden, die in einer Datenbank (26) hinterlegt sind, wobei in der Datenbank (26) Merkmale oder Merkmalskombinationen sowie den Merkmalen oder den Merkmalskombinationen zugeordnete Sprecher hinterlegt sind.

15. Teleprompter (10) zur dynamischen Anzeige eines vordefinierten Textes, mit
- einem Bildschirm (12) zur Anzeige des Textes,
- einer Aufnahmeeinrichtung (14) zur Aufnahme einer identitätsspezifischen Eingabe,
- einer Auswerteeinheit zur Umwandlung der identitätsspezifischen Eingabe in ein elektrisches Signal, zur Auswertung des elektrischen Signals sowie zur Erkennung des Sprechers, und
- einer Steuereinheit zur Erzeugung eines Steuersignals zum Ansteuern des Bildschirms (12) zur dynamischen Anzeige des Textes unter Verwendung des mindestens einen Anzeigeparameters und in Abhängigkeit des erkannten Sprechers.

## Claims

1. A method (S100) for controlling a teleprompter (10) for the dynamic display of a predefined text on a screen (12) of the teleprompter (10), the method (S100) comprising the following steps:
- recording (S110) at least one identity-specific input of a speaker by using a recording device, and generating a corresponding electrical signal,
- recognizing (S120) the speaker by evaluating the generated electrical signal,
- determining (S130) at least one display parameter depending on the recognized speaker,
- dynamically displaying (S140) the text on the screen (12) of the teleprompter (10) by using the at least one display parameter.

2. The method (S100) according to claim 1, **characterized in that**
- recording (S110) the at least one identity-specific input of the speaker includes recording a voice input of the speaker;
- the receiving device comprises a microphone (18); and
- the electrical signal comprises an audio signal (22).

3. The method (S100) according to any one of claims 1 or 2, **characterized in that**
- recording (S110) the identity-specific input of the speaker includes recording an image recording of the speaker;
- the receiving device comprises a camera; and
- the electrical signal comprises an image signal.

4. The method (S100) according to any one of the preceding claims, **characterized in that** at least one display parameter determined depending on the recognized speaker is the display speed of the dynamically displayed text on the screen (12).

5. The method (S100) according to any one of the preceding claims, **characterized in that** at least one display parameter determined depending on the recognized speaker relates to at least one font color, a background color or a font type of the displayed text or a screen configuration parameter.

6. The method (S100) according to any one of claims 2 to 5, **characterized in that** the speaker recognition is based on a detection of the speaker fundamental frequency.

7. The method (S100) according to any one of claims 2 to 6, **characterized in that** the speaker recognition is based on a spectral analysis of the audio signal (22).

8. The method (S100) according to any one of claims 2 to 7, **characterized in that** the speaker recognition is based on a cepstral analysis of the audio signal (22) and a detection of the speaker fundamental frequency in the cepstral domain.

9. The method (S100) according to any one of claims 2 to 8, **characterized in that** the speaker recognition is based on determining the speaker fundamental frequency in the spectral range or in the cepstral range, wherein only audio signals (22) to be associated with a voiced sound are evaluated for the speaker recognition, wherein preferably a voiced/unvoiced analysis is used for determining the audio signals (22) to be associated with a voiced sound, wherein the first cepstral coefficient of the audio signal (22) is evaluated for the voiced/unvoiced analysis of the audio signal (22), and wherein a voiced sound is inferred if the first cepstral coefficient is greater than zero.

10. The method (S100) according to any one of claims 2 to 9, **characterized in that** the method (S100) comprises a speech pause detection and a repeated speaker recognition, wherein the interval between two consecutive speaker recognition processes is dynamic and depends on the speech pause detected.

11. The method (S100) according to any one of the preceding claims, **characterized in that** the voice input of the speaker is recorded by using a microphone array (16), and that a beamforming method is used to increase the accuracy of the speaker recognition.

12. The method (S100) according to any one of claims 3 to 11, **characterized in that** the speaker recognition is based on a face recognition.

13. The method (S100) according to any one of claims 3 to 12, **characterized in that** the method for recognizing the speaker comprises the extraction of several features from the image signal and the subsequent evaluation of the features.

14. The method (S100) according to claim 13, **characterized in that** the extracted features or feature combinations are compared to features or feature combinations stored in a database (26), wherein features or feature combination and speakers associated with the features or the feature combinations are stored in the database (26).

15. A teleprompter (10) for the dynamic display of a predefined text, comprising
- a screen (12) for displaying the text,
- a recording device (14) for recording an identity-specific input,
- an evaluation unit for converting the identity-specific input into an electrical signal for evaluating the electrical signal and for recognizing the speaker, and
- a control unit for generating a control signal for controlling the screen (12) for the dynamic display of the text by using the at least one display parameter and depending on the recognized speaker.

## Revendications

1. Procédé (S100) pour la commande d'un téléprompteur (10) pour l'affichage dynamique d'un texte prédéfini sur un écran (12) du téléprompteur (10), dans lequel le procédé (S100) comprend les étapes suivantes :
- enregistrement (S110) d'au moins une entrée spécifique à l'identité d'un locuteur en utilisant un dispositif d'enregistrement et en générant un signal électrique correspondant,
- reconnaissance (S120) du locuteur par évaluation du signal électrique généré,
- détermination (S130) d'au moins un paramètre d'affichage en fonction du locuteur reconnu,
- affichage dynamique (S140) du texte sur l'écran (12) du téléprompteur (10) en utilisant l'au moins un paramètre d'affichage.

2. Procédé (S100) selon la revendication 1, **caractérisé en ce que**
- l'enregistrement (S110) de l'entrée spécifique à l'identité du locuteur possède l'enregistrement d'une entrée vocale du locuteur ;
- le dispositif d'enregistrement présente un microphone (18) ; et
- le signal électrique comprend un signal audio (22).

3. Procédé (S100) selon l'une des revendications 1 ou 2,
**caractérisé en ce que**
- l'enregistrement (S110) de l'entrée spécifique à l'identité du locuteur possède l'enregistrement d'une image du locuteur ;
- le dispositif d'enregistrement présente une caméra ; et
- le signal électrique comprend un signal d'image.

4. Procédé (S100) selon l'une des revendications précédentes, **caractérisé en ce qu'**au moins un paramètre d'affichage déterminé en fonction du locuteur reconnu est la vitesse d'affichage du texte affiché dynamiquement sur l'écran (12).

5. Procédé (S100) selon l'une des revendications précédentes, **caractérisé en ce qu'**au moins un paramètre d'affichage déterminé en fonction du locuteur connu concerne au moins une couleur de police, une couleur de fond ou une taille de police du texte affiché ou un paramètre de configuration d'écran.

6. Procédé (S100) selon l'une des revendications 2 à 5,
**caractérisé en ce que** la reconnaissance du locuteur est basée sur une détection de la fréquence fondamentale du locuteur.

7. Procédé (S100) selon l'une des revendications 2 à 6,
**caractérisé en ce que** la reconnaissance du locuteur est basée sur une analyse spectrale du signal audio (22).

8. Procédé (S100) selon l'une des revendications 2 à 7,
**caractérisé en ce que** la reconnaissance du locuteur est effectuée sur la base d'une analyse du cepstre du signal audio (22) et d'une détection de la fréquence fondamentale du locuteur dans le domaine du cepstre.

9. Procédé (S100) selon l'une des revendications 2 à 8,
**caractérisé en ce que** la reconnaissance du locuteur est basée sur une spécification de la fréquence fondamentale du locuteur dans le domaine spectral ou dans le domaine du cepstre, dans lequel, pour la reconnaissance du locuteur, seuls les signaux audio (22) qui doivent être associés à un son vocal sont analysés, dans lequel de préférence une analyse vocale/non vocale est utilisée pour spécifier les signaux audio (22) qui doivent être associés à un son vocal, dans lequel, pour l'analyse vocale/non vocale du signal audio (22), le premier coefficient de cepstre du signal audio (22) est analysé et dans lequel on conclut à un son vocal lorsque le premier coefficient de cepstre est supérieur à zéro.

10. Procédé (S100) selon l'une des revendications 2 à 9,
**caractérisé en ce que** le procédé (S100) comprend une détection de pauses de parole ainsi qu'une reconnaissance répétée du locuteur, dans lequel l'intervalle entre deux processus successifs de reconnaissance du locuteur est effectué de manière dynamique et en fonction des pauses de parole détectées pauses de parole détectées.

11. Procédé (S100) selon l'une des revendications précédentes,
**caractérisé en ce que** l'enregistrement de l'entrée vocale du locuteur est effectuée en utilisant un réseau de microphones (16) et **en ce qu'**un procédé de formation de faisceau est utilisé pour augmenter la précision de la reconnaissance du locuteur.

12. Procédé (S100) selon l'une des revendications 3 à 11,
**caractérisé en ce que** la reconnaissance du locuteur est basée sur une reconnaissance faciale.

13. Procédé (S100) selon l'une des revendications 3 à 12,
**caractérisé en ce que** le procédé pour la reconnaissance du locuteur comprend l'extraction de plusieurs caractéristiques du signal d'image et l'évaluation ultérieure des caractéristiques.

14. Procédé (S100) selon la revendication 13, **caractérisé en ce que** les caractéristiques ou combinaisons de caractéristiques extraites sont comparées avec des caractéristiques ou combinaisons de caractéristiques qui sont mémorisées dans une base de données (26), dans lequel des caractéristiques ou combinaisons de caractéristiques ainsi que des locuteurs associés aux caractéristiques ou aux combinaisons de caractéristiques sont mémorisés dans la base de données (26).

15. Téléprompteur (10) pour l'affichage dynamique d'un texte prédéfini, comportant
- un écran (12) pour l'affichage du texte,
- un dispositif d'enregistrement (14) permettant d'enregistrer une entrée spécifique à l'identité,
- une unité d'évaluation pour la conversion de l'entrée spécifique à l'identité en un signal électrique, pour l'évaluation du signal électrique ainsi que pour la reconnaissance du locuteur, et
- une unité de commande pour la génération d'un signal de commande pour commander l'écran (12) pour l'affichage dynamique du texte en utilisant l'au moins un paramètre d'affichage et en fonction du locuteur reconnu.
